# EUROPEAN PATENT APPLICATION

(11) **EP 1 413 393 A2**
(43) Date of publication of application: **28.04.2004**
(21) Application number: 03023588.1
(22) Date of filing: 16.10.2003
(51) Int. Cl.: B23Q 11/08

(54) **Exterior cover for machine tool**

(30) Priority: 25.10.2002 JP 2002310574
(71) Applicant: Mori Seiki Co., Ltd., Yamatokoriyama-shi, Nara 639-1160 (JP)
(72) Inventor: Oguma, Masahiro, Yamatokoriyama-shi Nara 639-1160 (JP); Saraie, Hidenori, Yamatokoriyama-shi Nara 639-1160 (JP)
(74) Representative: Reinhard - Skuhra - Weise & Partner GbR

(57) **Abstract**

An exterior cover (1) for a machine tool is provided which permits a machine tool body (3) to maintain its machining accuracy. The exterior cover comprises a cover frame (10) placed on a floor where the machine tool is installed, an inner cover plate (20) partly attached to an inner side of the cover frame, and an outer cover plate (30) attached to an outer side of the cover frame. A thermal insulating material (40) is provided between the inner cover plate and the outer cover plate, and bonded to the inner cover plate. When the exterior cover is assembled, the cover frame is brought into abutment against the machine tool body with the intervention of a positioning member (17). Thus, the exterior cover can easily be positioned with respect to the machine tool body.

## Description

### BACKGROUND OF THE INVENTION

### Field of the Invention

The present invention relates to a machine tool exterior cover which entirely or partly covers a machine tool body and, particularly, to an exterior cover for a machine tool adapted to perform a high precision machining operation.

### Description of Related Art

In general, machine tools such as machining centers, lathes and grinders are entirely or partly covered by exterior covers for operator's safety and for prevention of scattering of chips. Such an exterior cover is generally supported on a bed of a machine tool body so that the exterior cover can be handled unitarily with the machine tool body in shipping and transportation of the machine tool (see, for example, Japanese Unexamined Patent Publication No. 2002-200539).

Where the exterior cover is supported on the bed of the machine tool body, however, the total weight of the exterior cover is unevenly applied on the bed, resulting in deformation of the bed. Therefore, slideways provided on the bed for guiding a table and a saddle on the bed are liable to have a reduced straightness and suffer from distortion. This may reduce a workpiece machining accuracy.

The reduction of the machining accuracy resulting from the provision of the exterior cover on the bed is typically on the order of several micrometers and, therefore, presents no problem for an ordinary machine tool. For a precision machine tool required to have a machining accuracy of not greater than 1µm, however, the reduction of the machining accuracy is not negligible. Therefore, a consideration should be given to the precision machine tool for prevention of the deformation of the bed, for example, by increasing the rigidity of the bed. This leads to a cost increase.

It is therefore an object of the present invention to provide a machine tool exterior cover which permits a machine tool body to maintain its intrinsic machining accuracy.

### SUMMARY OF THE INVENTION

According to the present invention, there is provided a machine tool exterior cover, which comprises an exterior cover portion for entirely or partly covering a machine tool body, wherein the exterior cover portion is placed upright on a floor where the machine tool body is installed.

With this arrangement, the exterior cover is not supported on the machine tool body, but placed on the floor where the machine tool body is installed. Therefore, the weight of the exterior cover is not applied on the machine tool body. Unlike the conventional exterior cover supported on the bed of the machine tool body, the inventive exterior cover is free from the reduction of the straightness of the slideways provided on the bed and the distortion of the slideways. Therefore, the machine tool body can maintain its intrinsic machining accuracy.

Since the exterior cover placed upright on the floor cannot be handled unitarily with the machine tool body, the exterior cover should be shipped and installed separately from the machine tool body. For ease of the shipping and installation of the exterior cover, it is desirable that the exterior cover is divided into a plurality of units for transportation thereof and, after the machine tool body is installed, the plurality of units are assembled into the exterior cover for installation of the exterior cover.

However, the surface of the floor on which the exterior cover is placed is less smooth and less planar than the surface of the bed of the machine tool body. Where the units of the exterior cover are assembled from laterally opposite sides of the machine tool body already installed and the resulting semi-assemblies are combined above the machine tool body, for example, mating ends of the semi-assemblies are not necessarily properly matched. If the mating ends of the semi-assemblies are not matched, the attitudes and positions of the semi-assemblies should be changed, or the semi-assemblies should be reassembled, requiring troublesome operations. Therefore, the exterior cover cannot efficiently be installed.

Therefore, the inventive exterior cover may further comprise a positioning member to be brought into abutment against the machine tool body for positioning the exterior cover laterally of the machine tool body. With this arrangement, the positioning member is brought into abutment against the machine tool body which has a sufficient dimensional accuracy. Thus, the exterior cover can accurately be positioned laterally of the machine tool body without applying its weight onto the machine tool body. Therefore, where the units of the exterior cover are assembled from the opposite sides of the machine tool body for the installation of the exterior cover, the mating ends can easily be matched. Thus, the exterior cover can efficiently be installed.

In the exterior cover, an oil pan may be supported by the exterior cover portion for guiding chips into a trough formed in a bed of the machine tool body. With this arrangement, the weight of the oil pan is not applied on the machine tool body. Therefore, the machining accuracy is improved as compared with the conventional machine tool in which the oil pan is supported on the bed.

The exterior cover portion may comprise a cover frame to be placed upright on the floor, and an inner cover plate and an outer cover plate attached to the cover frame with the cover frame interposed therebetween. With this arrangement, the exterior cover can easily be produced, which has a hollow structure excellent in heat insulative property, as compared with the conventional exterior cover which includes a box-shaped cover unit produced by folding a metal sheet.

The exterior cover portion may further comprise a thermal insulating material provided between the inner cover plate and the outer cover plate.

The foregoing and other objects, features and effects of the present invention will become more apparent from the following description of the preferred embodiments with reference to the attached drawings.

### BRIEF DESCRIPTION OF THE DRAWINGS

Fig. 1 is a perspective view illustrating a vertical machining center covered by an exterior cover according to one embodiment of the present invention;
Fig. 2 is a perspective view illustrating the exterior cover with outer cover plates thereof being removed from a front exterior cover portion thereof;
Fig. 3 is a perspective view illustrating the exterior cover with the outer and inner cover plates being removed from the front exterior cover portion;
Fig. 4 is a perspective view illustrating a cover frame of the front exterior cover portion divided into a plurality of frame pieces;
Fig. 5 is a sectional view illustrating a part of the front exterior cover portion;
Figs. 6A and 6B are diagrams for explaining a method for positioning a particular frame piece of the front exterior cover portion;
Fig. 7 is a sectional view illustrating how an oil pan is attached to the exterior cover;
Fig. 8 is a perspective view for explaining an assembling process for the exterior cover;
Fig. 9 is a perspective view illustrating the vertical machining center; and
Figs. 10A and 10B are diagrams for explaining a method for positioning a magazine unit with respect to a main body of the vertical machining center.

### DESCRIPTION OF THE PREFERRED EMBODIMENTS

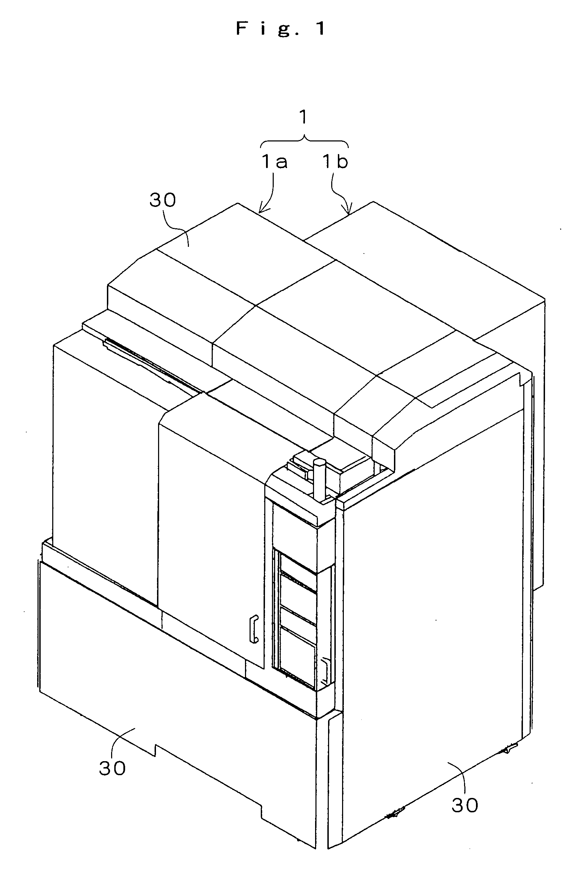

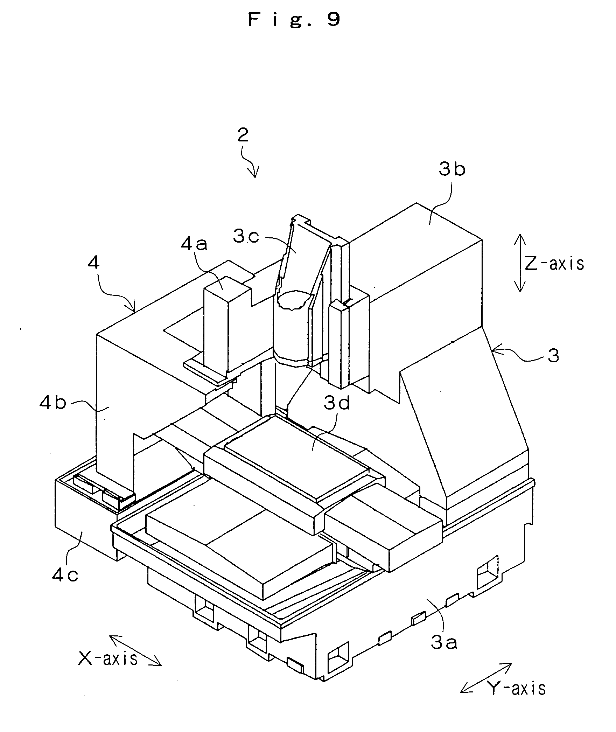

An embodiment of the present invention will hereinafter be described with reference to the attached drawings. In Fig. 1 , a vertical machining center 2 shown in Fig. 9 is illustrated as being covered by an exterior cover 1.

As shown in Fig. 9, the vertical machining center 2 includes a main body 3 for machining a workpiece, and a magazine unit 4 including a tool magazine which houses a plurality of tools and an automatic tool changer which exchanges a tool between a spindle of the main body 3 and the tool magazine. The main body 3 includes a bed 3a, a column 3b disposed upright on a rear portion of the bed 3a, a spindle head 3c movable up and down (along the Z-axis) on a front face of the column 3b, a saddle (not shown) movable forward and rearward (along the Y-axis) on the bed 3a in front of the column 3b, and a table 3d movable laterally (along the X-axis) on the saddle.

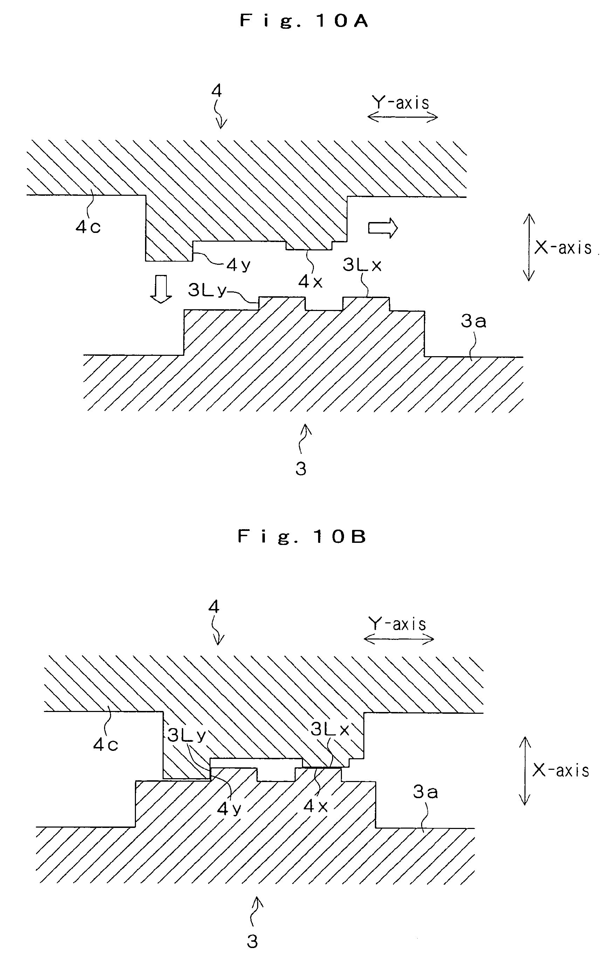

As shown in Fig. 9, the magazine unit 4 includes a unit body 4a mounted with the tool magazine and the automatic tool changer, and an upper unit base 4b and a lower unit base 4c supporting the unit body 4a. As shown in Figs. 10A and 10B, the magazine unit 4 is positioned relative to the main body 3 with respect to the X-axis and the Y-axis by bringing positioning portions 4x, 4y provided on a right face of the lower unit base 4c in abutment against positioning portions 3Lx, 3Ly provided on a left face of the bed 3a of the main body 3.

As shown in Fig. 1, the exterior cover 1 includes a front exterior cover portion 1a which covers a portion of the main body 3 located in front of the column 3b and the magazine unit 4, and a rear exterior cover portion 1b which covers the column 3b. The front exterior cover portion 1a is disposed upright on a floor where the main body 3 is installed, while the rear exterior cover portion 1b is disposed on a base of a power unit provided behind the column 3b.

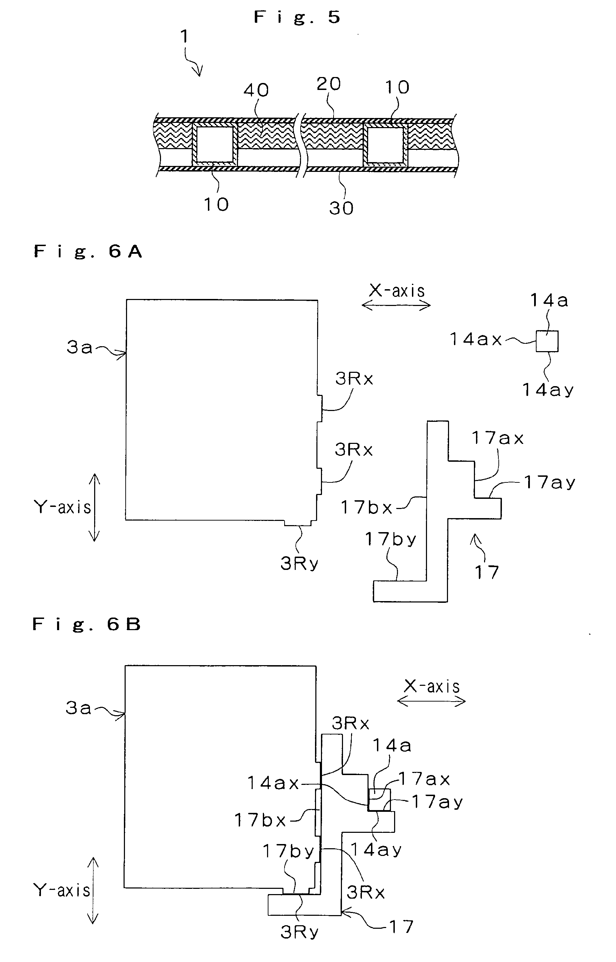

As shown in Figs. 1 to 4, the front exterior cover portion 1a includes a cover frame 10 disposed upright on the floor, inner cover plates 20 partly attached to an inner side of the cover frame 10, and outer cover plates 30 attached to an outer side of the cover frame 10. A thermal insulating material 40 is provided between the inner cover plates 20 and the outer cover plates 30, and bonded to the inner cover plates 20 as shown in Fig. 5.

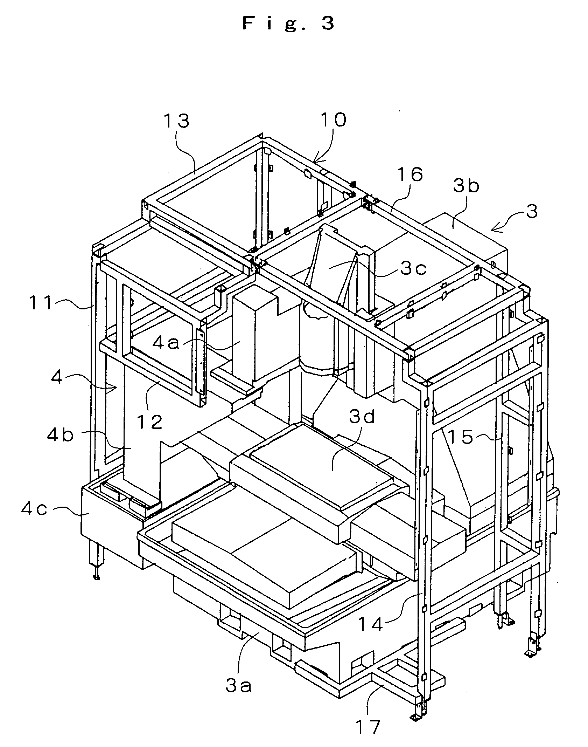

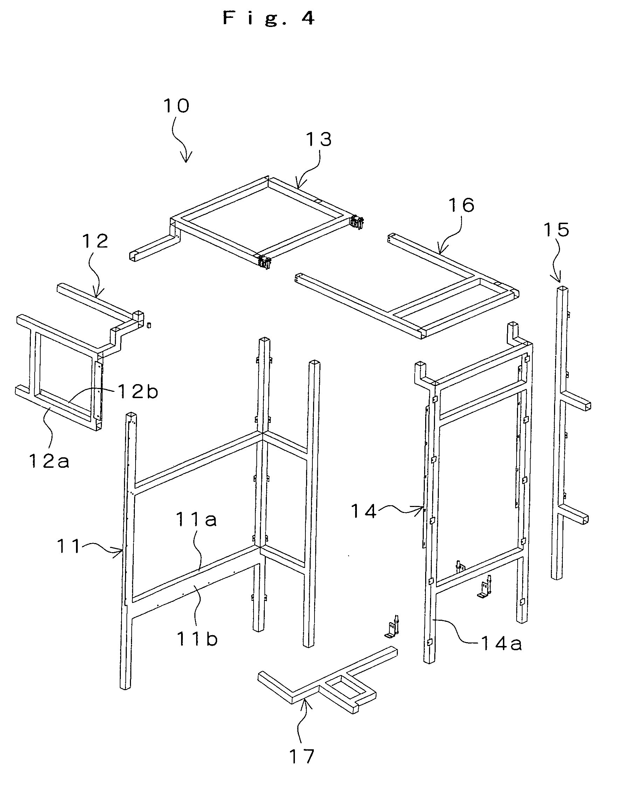

As shown in Figs. 3 and 4, the cover frame 10 includes a frame piece 11 disposed on a left side and a left back side of the magazine unit 4, a frame piece 12 disposed on an upper front side of the magazine unit 4, a frame piece 13 disposed above the magazine unit 4, a frame piece 14 disposed on a right side of the main body 3, a frame piece 15 disposed on a right rear side of the main body 3, and a frame piece 16 disposed above a machining region of the main body 3. The frame pieces 11, 14 are disposed upright on the floor where the main body 3 and the magazine unit 4 are installed, and the frame pieces 11 to 16 are connected to one another.

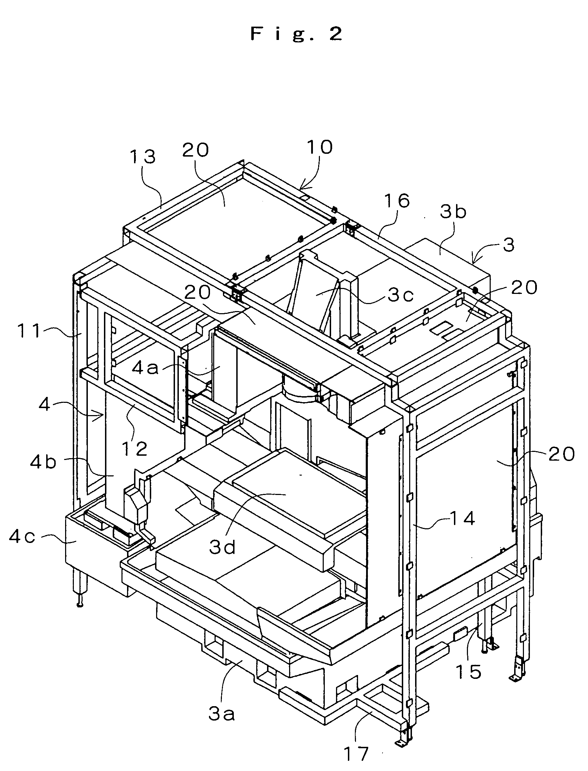

As shown in Fig. 2, the inner cover plates 20 are attached to the respective frame pieces 13, 14 15, 16. No inner cover plate 20 is attached to a portion of the frame piece 16 where the spindle head 3c is moved up and down.

As shown in Figs. 2 to 4, a support plate 11b and a support plate 12b which function as positioning members are attached to a square pipe 11a of the frame piece 11 and a square pipe 12a of the frame piece 12, respectively. The frame piece 11 and the frame piece 12 are respectively fixed to the lower unit base 4c and the upper unit base 4b of the magazine unit 4 by bolts with inner surfaces of the support plate 11b and the support plate 12b kept in abutment against a left face of the lower unit base 4c and a front face of the upper unit base 4b thereby to be positioned with respect to the X-axis and the Y-axis.

As shown in Figs. 2 to 4, a generally L-shaped positioning member 17 extending along the X-axis is detachably fixed to the frame piece 14 by bolts. As shown in Figs. 6A and 6B, the frame piece 14 is positioned with respect to the X-axis and the Y-axis with positioning portions 17bx and 17by of the positioning member 17 kept in abutment against positioning portions 3Rx and 3Ry provided on a right face and a front face of the bed 3a and with positioning portions 14ax and 14ay of the square pipe (support post) 14a of the frame piece 14 kept in abutment against positioning portions 17ax and 17ay of the positioning member 17.

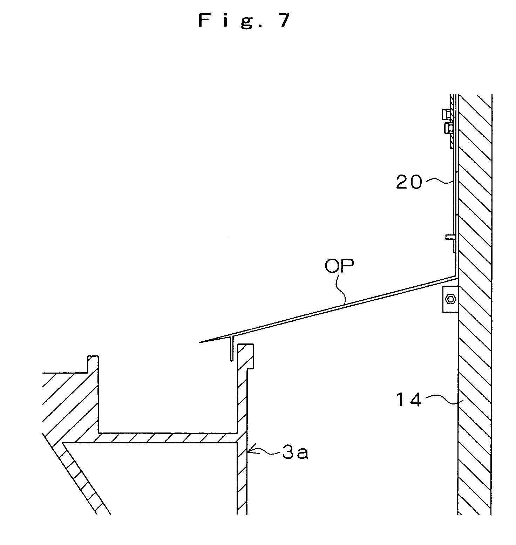

As shown in Fig. 7, a right oil pan OP is fixed to the front exterior cover portion 1a with an upper vertical portion thereof being interposed between the frame piece 14 and the inner cover plate 20 and fixed to the frame piece 14 by screws. Thus, the weight of the oil pan OP is not applied on the bed 3a of the main body 3. Though not shown, an upper edge portion of a left oil pan is fixed to a right face of the upper unit base 4b of the magazine unit 4. Thus, the weight of this oil pan is not applied on the bed 3a of the main body 3.

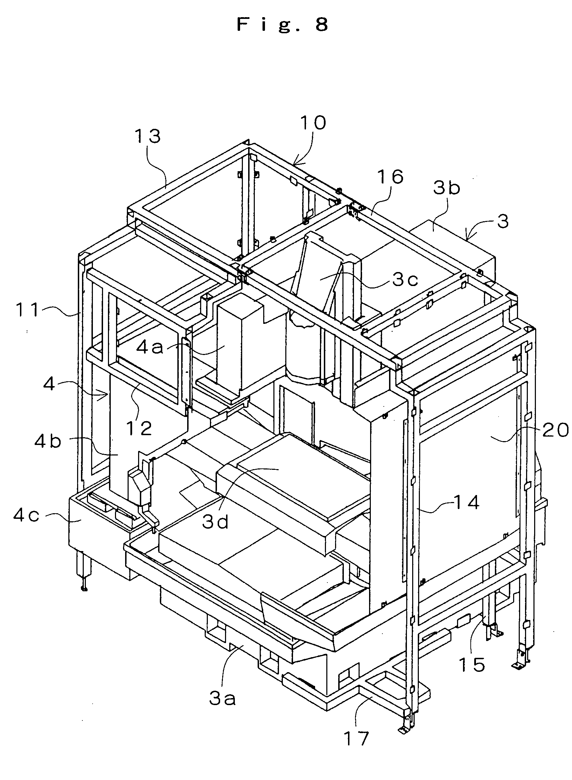

After the main body 3 and the magazine unit 4 are placed on the floor, the front exterior cover potion 1a having the aforesaid construction is built up by assembling the cover frame 10 (see Fig. 8) from the frame pieces 11 to 16 across the main body 3 and the magazine unit 4 along the X-axis and successively attaching the inner cover plates 20 and the outer cover plates 30 to the cover frame 10. However, it is impossible to attach the inner cover plate 20 to the frame piece 14 after the assembling of the cover frame 10. Therefore, the inner cover plate 20 is preliminarily attached to the frame piece 14, which is in turn placed upright on the floor as shown in Fig. 8.

The cover frame 10 is built up by assembling a left frame portion including the frame pieces 11, 12, 13 from the left side of the magazine unit 4, assembling a right frame portion including the frame pieces 14, 15, 16 from the right side of the main body 3, and combining the left and right frame portions. If the frame piece 11 and the frame piece 14 fixed to the floor are located in offset positional relation, it is impossible to smoothly and assuredly combine the left and right frame portions. Therefore, the frame piece 14 is positioned with respect to the X-axis and the Y-axis in the aforesaid manner with the use of the positioning member 17. The frame piece 11 is positioned in the following manner.

The magazine unit 4 is preliminarily positioned with the positioning portions 4x, 4y of the lower unit base 4c kept in abutment against the positioning portions 3Lx, 3Ly of the bed 3a of the main body 3. Therefore, the support plate 11b of the frame piece 11 is brought into abutment against the left face (finely finished surface) of the lower unit base 4c of the magazine unit 4 thereby to be positioned with respect to the X-axis, and the support plate 12b of the frame piece 12 is brought into abutment against the front face (finely finished surface) of the upper unit base 4b of the magazine unit 4 thereby to be positioned with respect to the Y-axis. The frame piece 11 and the frame piece 12 are connected to each other, while being kept in these positions. Thus, the frame piece 11 is positioned with respect to the X-axis and the Y-axis. In this state, the support plate 11b is supported by the left face of the lower unit base 4c, while the support plate 12b is supported by the front face of the upper unit base 4b. Then, the frame piece 11 is fixed to the floor.

As described above, the front exterior cover portion 1a is placed upright on the floor but not on the bed 3a of the main body 3 of the vertical machining center 2 , so that the weight of the front exterior cover portion 1a is not applied on the main body 3. Therefore, the inventive exterior cover is free from the reduction of the straightness of the slideways provided on the bed 3a for guiding the saddle and the table 3d and the distortion of the slideways, unlike the conventional exterior cover which is supported on the bed or the like of the machine tool body. Therefore, the main body 3 can maintain its intrinsic machining accuracy.

As described above, the frame pieces 14 and 11 of the front exterior cover portion 1a are positioned by bringing the positioning member 17 and the support plates 11b, 12b against the bed 3a of the main body 3 and the finely finished faces of the upper magazine base 4b and the lower magazine base 4c of the magazine unit 4 when the cover frame 10 is assembled. Even if the cover frame 10 is divided into the plurality of frame pieces, the cover frame 10 can smoothly and assuredly be assembled, and the front exterior cover portion 1a can efficiently be installed.

As described above, the oil pans OP are fixed to the front exterior cover portion 1a, so that the weight of the oil pans OP is rarely applied on the bed 3a of the main body 3. Therefore, the deformation of the bed 3a is suppressed and the workpiece machining accuracy is improved, as compared with the conventional machine tool in which the oil pans are supported on the bed.

The front exterior cover portion 1a is constructed such that the inner cover plates 20 and the outer cover plates 30 are attached to the cover frame 10 disposed upright on the floor with the cover frame 10 interposed therebetween. Therefore, the exterior cover can easily be provided which has a hollow structure excellent in heat insulating property, as compared with the conventional exterior cover which includes a box-shaped cover unit produced by folding a metal sheet. Particularly, where the thermal insulating material 40 is provided in the hollow portion of the front exterior cover portion 1a, the thermal insulating material 40 is bonded to the inner cover plates 20 before the outer cover plates 30 are attached to the cover frame 10. Thus, the exterior cover can easily be provided which includes the thermal insulating material.

In the embodiment described above, the explanation has been given to the exterior cover which is produced by assembling the frame pieces from the opposite sides of the vertical machining center 2 along the X-axis and combining the resulting semi-assemblies above the vertical machining center 2. However, the assembling method for the exterior cover is not limited to this method. The exterior cover may be assembled from one side to the other side of the vertical machining center 2 along the X-axis. Of course, the positioning method employed for the inventive exterior cover is effective for an exterior cover which is adapted to be assembled along the Y-axis.

In the embodiment described above, the positioning member 17 is fixed to the frame piece 14 by the bolts. However, the fixing method is not limited to this method. The positioning member 17 may preliminarily be unified with the frame piece 14 by welding.

In the embodiment described above, the exterior cover is adapted to cover the vertical machining center. The inventive exterior cover is applicable to any of various machine tools.

While the present invention has been described in detail by way of the embodiment thereof, it should be understood that the foregoing disclosure is merely illustrative of the technical principles of the present invention but not limitative of the same. The spirit and scope of the present invention are to be limited only by the appended claims.

## Claims

1. An exterior cover for a machine tool, comprising an exterior cover portion for entirely or partly covering a machine tool body, wherein the exterior cover portion is placed upright on a floor where the machine tool body is installed.

2. An exterior cover as set forth in claim 1, further comprising a positioning member to be brought into abutment against the machine tool body for positioning the exterior cover laterally of the machine tool body.

3. An exterior cover as set forth in claim 1, wherein an oil pan is supported by the exterior cover portion for guiding chips into a trough formed in a bed of the machine tool body.

4. An exterior cover as set forth in claim 2, wherein an oil pan is supported by the exterior cover portion for guiding chips into a trough formed in a bed of the machine tool body.

5. An exterior cover as set forth in claim 1, wherein the exterior cover portion comprises a cover frame to be placed upright on the floor, and an inner cover plate and an outer cover plate attached to the cover frame with the cover frame interposed therebetween.

6. An exterior cover as set forth in claim 2, wherein the exterior cover portion comprises a cover frame to be placed upright on the floor, and an inner cover plate and an outer cover plate attached to the cover frame with the cover frame interposed therebetween.

7. An exterior cover as set forth in claim 3, wherein the exterior cover portion comprises a cover frame to be placed upright on the floor, and an inner cover plate and an outer cover plate attached to the cover frame with the cover frame interposed therebetween.

8. An exterior cover as set forth in claim 4, wherein the exterior cover portion comprises a cover frame to be placed upright on the floor, and an inner cover plate and an outer cover plate attached to the cover frame with the cover frame interposed therebetween.

9. An exterior cover as set forth in claim 5, wherein the exterior cover portion further comprises a thermal insulating material provided between the inner cover plate and the outer cover plate.

10. An exterior cover as set forth in claim 6, wherein the exterior cover portion further comprises a thermal insulating material provided between the inner cover plate and the outer cover plate.

11. An exterior cover as set forth in claim 7, wherein the exterior cover portion further comprises a thermal insulating material provided between the inner cover plate and the outer cover plate.

12. An exterior cover as set forth in claim 8, wherein the exterior cover portion further comprises a thermal insulating material provided between the inner cover plate and the outer cover plate.
